# EUROPEAN PATENT APPLICATION

(11) **EP 4 727 172 A1**
(43) Date of publication of application: **15.04.2026**
(21) Application number: 25207919.9
(22) Date of filing: 10.10.2025
(51) Int. Cl.: H04R 25/00, H04R 5/04, H04R 3/04, A63F 13/54

(54) **SYSTEM AND METHOD FOR MODIFYING VIDEO GAME AUDIO**

(30) Priority: 11.10.2024 GB 202415016
(71) Applicant: Sony Interactive Entertainment Inc., Tokyo 108-0075 (JP)
(72) Inventor: ARMSTRONG, Calum, London, W1F 7LP (GB); BUCHANAN, Christopher George, London, W1F 7LP (GB); SCHEMBRI, Danjeli, London, W1F 7LP (GB); SMITH, Alexei Ashton Derek, London, W1F 7LP (GB)
(74) Representative: Fish & Richardson P.C.

(57) **Abstract**

A computer-implemented method for adjusting the audio output of a video gaming system to compensate for a user's hearing loss profile. The method comprises: determining an optimal boost curve to be applied to an output audio signal, the optimal boost curve defining a frequency dependent gain value for compensating for a user's hearing loss profile; selecting a plurality of signal processing filters from a filter bank stored in a memory such that, when combined, the plurality of signal processing filters approximate the optimal boost curve; combining the plurality of filters to form an approximate boost curve and applying the approximate boost curve to the output audio signal to compensate for a user's hearing loss profile.

## Description

### FIELD OF THE INVENTION

The present invention is in the field of video gaming systems and relates to systems and methods for modifying video game audio.

### BACKGROUND

Audio is a key contributor to user enjoyment when playing video games. Types of audio used in video games typically include background music, ambient sound during a video game scene, and voice chat with other users playing the same game. High-quality audio enhances the immersive experience and overall enjoyment of the game.

Many users, however, are affected by hearing loss or impairment, which can significantly impact their ability to hear video game audio and thus diminish their gaming experience.

Some users may have moderate to severe hearing loss. These individuals may use hearing aids, typically obtained via prescription. They often have access to an audiogram, which is a graph showing the user's hearing sensitivity across various frequencies, detailing their hearing profile. Despite the availability of hearing aids, these devices are generally incompatible with gaming systems, posing a challenge for this user group in accessing game audio effectively.

Other users have low to moderate hearing loss, often caused by aging or other factors such as tinnitus. This group is typically less likely to use prescription hearing aids, relying instead on other means to compensate for their hearing impairment.

There is a significant need to assist users affected by hearing loss or impairment in the video gaming context. Traditional hearing aids are designed with the assumption that a substantial portion of environmental audio is unimportant, focusing on amplifying certain key frequencies. In contrast, video game audio is meticulously curated, with each sound element intentionally included to enhance the gaming experience. Therefore, preserving as much of the audio as possible is crucial for maintaining the integrity and enjoyment of the game for users with hearing impairments. Furthermore, often ideally the adjustments required to compensate for hearing loss need to be varied in real time with the varying audio output from the video game. This presents challenges in efficiently preparing and updating the required signal processing filters to provide the varying audio adjustments during gameplay.

Furthermore, existing hearing aid hardware is not compatible with video gaming systems and as such, their utility is limited in the context of video game audio quality.

There is therefore a need for a method that overcomes these issues and facilitates clearer audio whilst minimizing any loss of audio quality.

### SUMMARY OF INVENTION

In a first aspect of the invention, there is provided a computer-implemented method for adjusting the audio output of a video gaming system to compensate for a user's hearing loss profile, the method comprising: determining an optimal boost curve to be applied to an output audio signal, the optimal boost curve defining a frequency dependent gain value for compensating for a user's hearing loss profile; selecting a plurality of signal processing filters from a filter bank stored in a memory such that, when combined, the plurality of signal processing filters approximate the optimal boost curve; combining the plurality of filters to form an approximate boost curve and applying the approximate boost curve to the output audio signal to compensate for a user's hearing loss profile.

In this way, the audio output of a video gaming system can be adjusted in real time to compensate for the hearing loss profile of a user. Unlike hearing aids designed to boost the most important components of every-day audio, video game audio is curated such that all components should be retained and audible to the user. Furthermore, the audio is dynamic based on the gameplay so it is not possible to determine the optimal adjustments to be made ahead of time. The present invention allows for the adjustments to be dynamically varied in real time, based on the components of the audio signal to be output. It furthermore allows this to be done in a computationally-efficient manner, by using a discrete set of stored filters which are combined to approximate the changing optimal boost curve required. This required a reduced degree of computation in comparison to constructing a specific required filter in real-time to provide the required gain values across the frequency range.

Preferably the optimal boost curve to be applied varies during gameplay. Preferably the method comprises continually updating the selection of plurality of signal processing filters from the filter bank to approximate the varying optimal boost curve. In this way, the approximate boost curve is continually updated to approximate the optimal boost curve, where the optimal boost curve is determined based on the changing characteristics of the output audio.

Preferably the optimal boost curve to be applied is determined based on characteristics of the audio signal to be output. Preferably the characteristics comprise a loudness value of the audio signal to be output. Preferably the method comprises continually, measuring a property of the output audio signal, determining an optimal boost curve to be applied and selecting an updated plurality of filters to approximate the optimal boost curve. Preferably the property comprises a loudness value of the audio signal within a frequency band.

Preferably the plurality of signal processing filters each define a frequency dependent gain value, where the gain value varies smoothly with frequency. Preferably the plurality of signal processing filters each comprise a digital biquadratic filter.

Preferably the optimal boost curve comprises a piecewise linear function defining the variation of gain value with frequency. Preferably the optimal boost curve comprises a step function defining the variation of gain value with frequency. In particular, the discontinuous or stepwise optimal boost function may be approximated by appropriate selection of a plurality of continuous, smoothly varying functions, stored in the filter bank.

Preferably selecting the plurality of signal processing filters comprises: selecting a plurality of filters from a larger number of filters stored in the filter bank, such that the plurality of selected filters when combined provide a frequency dependent gain curve that is within a threshold deviation from the optimal boost curve. In this way, any required boost curve shape can be approximated by appropriate combination of a limited number of "basis functions" stored in the memory. Preferably the method comprises selecting a plurality of signal processing filters (or "basis functions") that when summed are within a threshold deviation of the optimal boost curve.

Preferably selecting the plurality of signal processing filters comprises: selecting a plurality of signal processing filters from a filter bank stored in a memory and adjusting the gain of one or more selected filters such that, when combined, the plurality of signal processing filters approximate the optimal boost curve. In particular, an applied gain may be adjusted for each of the selected filters to best much the optimal boost curve. The gain applied to each selected filter may be adjusted independently. In particular, a differing gain value may be applied to each selected filter such that the selected and gain-adjusted signal processing filters form an approximate boost curve, where the approximate boost curve is preferably formed such that it is within a threshold deviation of the optimal boost curve.

Preferably the optimal boost curve comprises a piecewise linear function defining a linear variation of gain value with frequency in each of a plurality of frequency regions, wherein the plurality of signal processing filters each define a frequency dependent gain value, where the gain value varies smoothly with frequency, wherein the method comprises: selecting a plurality of signal processing filters that when summed provide an approximate boost curve that is within a threshold deviation of the optimal boost curve. The threshold deviation may be selected by a user to vary the accuracy with which the boost function is approximated.

Preferably selecting a plurality of signal processing filters from a filter bank comprises applying a fitting algorithm that determines the optimal combination of filters selected from the filter bank that best approximate the optimal boost curve. **In** particular, the selection of basis function may be performed automatically based on a fitting algorithm.

Preferably the method comprises, after determining the optimal boost curve: applying a negative offset to the optimal boost curve to provide an offset optimal boost curve defining negative and positive values of gain; selecting a plurality of signal processing filters from the filter bank such that, when combined, the plurality of signal processing filters approximate the offset optimal boost curve; combining the plurality of selected filters to form an offset approximate boost curve that approximates the offset optimal boost curve. When summing signal processing filters to approximate an optimal boost curve, there can be artefacts in the form of oscillating boost values around the maximum and minimum values of the optimal boost curve. This results from the summing of a plurality of peaks of the underlying basis functions, leading to a deviation from the optimal constant value of boost at these frequency ranges. The inventor have found this is mitigated by first applying a negative offset, for example between 5 and 50 dB, to the optimal boost curve before fitting the basis functions (the basis signal processing filters, often biquads) to the offset curve. This results in improved adjusted audio and reduced distortion.

The method preferably further comprises: applying the offset approximate boost curve to the output audio signal and subsequently applying a gain to the output audio signal to at least partially cancel the negative offset. In particular a positive gain may be applied to the adjusted output audio signal to provide a total compensation equivalent to the original, non-offset, approximate boost curve. The offset optimal boost curve, preferably centred around 0dV, is thus applied separated to a wide-band gain selected to compensation for the offset in the approximate boost curve, while retaining the advantages of the offset. In this way, after fitting the basis functions to the offset optimal boost curve to achieve the improved approximation of the optimal boost curve, the boost values may be returned to the intended values.

In some examples the value of the negative or positive offset is selected based on one or more properties of the video game audio. The value of the offset may be selected based on a determined scene loudness. In this way, the boost values may be determined based on how loud the audio is and how much "headroom" there is for further boosting the audio. For example, when applying the positive offset to cancel the initial negative offset, a small offset may be retained such that a negative gain is applied to some frequencies. This may be advantageous where there is insufficient headroom to boost all frequencies, but the relative differences in gain are retained.

In some examples, combining the plurality of filters to form an approximate boost curve and applying the approximate boost curve to the output audio signal comprises applying each signal processing filter in parallel.

In other examples, combining the plurality of filters to form an approximate boost curve and applying the approximate boost curve to the output audio signal comprises applying each signal processing filter in series.

Preferably the method further comprises applying a smoothing function to the approximate boost curve before applying to the output audio signal. In this way the oscillating shape of the approximate curve at high and low amplitudes may be further reduced.

In other examples the method further comprises applying a limiter to the audio signal after the approximate boost curve has been applied, wherein the limiter prevents the output audio exceeding a threshold loudness. This can mitigate the effects of sharp increases in amplitude.

Preferably determining an optimal boost curve comprises: obtaining a hearing loss profile associated with a user, the hearing loss profile defining a hearing loss value varying with frequency; determining an optimal boost curve for compensating the hearing loss value. In this way a user-specific optimal boost curve is determined based on their specific hearing loss profile. The hearing loss profile may be obtained by measuring a hearing loss profile of a user. This may involve outputting audio with a specific frequency band, increasing the amplitude and receiving a user input indicating when the user can hear the audio. The method may involve repeating this at a plurality of different frequency bands to record a hearing loss profile. In some examples the method comprises receiving a user selection of a hearing loss profile from a plurality of premade hearing loss profiles.

Preferably determining an optimal boost curve comprises: determining a loudness of the audio signal to be output; determining the optimal boost curve based on both the hearing loss profile and the loudness of the audio signal to be output. To provide optimal audio compensation, the boost values are preferably varied depending on the loudness of the audio to be output. Therefore the method preferably comprises continually measuring the loudness of the output audio signal (within each of a plurality of frequency bands) and determining the optimal boost curve depending on the determined loudness.

Preferably determining an optimal boost curve comprises: obtaining a hearing loss profile associated with a user, the hearing loss profile defining a hearing loss value varying with frequency; obtaining an audio signal to be output on a video gaming system, the audio data comprising a plurality of frequency bands; determining, for each frequency band of the plurality of frequency bands, a respective loudness level; selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile; and determining the optimal boost curve using the modulation profile for each frequency band and the hearing loss value provided by the hearing loss profile. In some examples the modulation profile may comprise a continuous function of loudness and frequency, such that the method may comprise inputting a frequency and loudness into the modulation function to determine a boost value, and constructing the optimal boost curve using the determined boost values.

Preferably determining, for each frequency band of the plurality of frequency bands, a respective loudness level comprises: obtaining an energy of the audio data within the frequency band; and determining the loudness level based on the energy of the frequency band. In this way, the loudness of each frequency band may be determined and used to determine the boost value to be applied.

Preferably determining the optimal boost curve comprises, within each frequency band, comprises: obtaining, from the hearing loss profile, a hearing loss value for each frequency value of the frequency band; obtaining, for each hearing loss value, a corresponding gain value from the modulation profile; and constructing the optimal boost curve from the determined gain values across the frequency bands. In this way, the optimal boost curve takes into account: (1) the hearing loss profile of the user, (2) the loudness of the audio signal to be output.

In another aspect of the invention there is provided a non-transitory storage medium comprising instructions that when executed by a processor cause the processor to perform any method described herein or defined within an appended claim.

In another aspect of the invention there is provided a computer program comprising instructions that when executed by a processor cause the processor to perform any method defined herein or within an appended claim.

In another aspect of the invention there is provided a video game system for modifying audio data, the system comprising a processor and being configured to perform any method described herein or defined within an appended claim.

The "video game audio" may refer to audio data associated with a video game run on the video gaming system. The video game audio data may originate from one or more game files comprising game logic. The "hearing loss profile" may be understood as data that describes how sensitive a user is to different frequencies. An "audio segment" may be understood as a portion of the video game audio that is to be output over the period of time. The "loudness level" may refer to a range of amplitudes or "loudness" that the frequency band falls within. The "modulation profile" may be understood as a function defining the relationship between hearing loss values and gain values to be applied. It may be in the form of gain curves, each corresponding to a different frequency band and/or loudness level.

Preferably, each modulation profile comprises a non-zero gain value for all non-zero hearing loss values. In this way, all frequency bands are modulated or boosted. As discussed above, in the context of video game audio, the audio is meticulously curated, with each sound element intentionally included to enhance the gaming experience. Since each modulation profile originates at the origin, all frequency bands may be modulated or boosted. Advantageously, audio quality may be improved without sacrificing any audio elements.

In some embodiments, the hearing loss profile is an audiogram. Advantageously, users who have access to an audiogram may use the audiogram, which is tailored to their specific hearing loss profile, thereby providing a greater quality of modified video game audio for that particular user.

In some embodiments, wherein receiving a user selection of the hearing loss profile comprises: outputting, for each frequency band of the plurality of frequency bands, test audio across a range of amplitudes; receiving a user input indicative of the user's sensitivity at each frequency band; and selecting a hearing loss profile from a plurality of premade hearing loss profiles based on the user input. In this way, the hearing loss profile may be tailored to a specific user even if that user does not have access to an audiogram, thereby providing a greater quality of modified game audio even without an audiogram.

In some embodiments, obtaining the energy of the frequency band comprises: calculating a Root Mean Square (RMS) value of the magnitude values of the frequency band. Since the frequency band comprises positive and negative amplitude values, the RMS value can provide a more meaningful measure of the energy of the frequency band.

### BRIEF DESCRIPTION OF DRAWINGS

Figure 1 illustrates a method flow diagram of a method according to the present invention
Figure 2A illustrates an exemplary optimal boost curve to be applied to output video game audio according to the present invention;

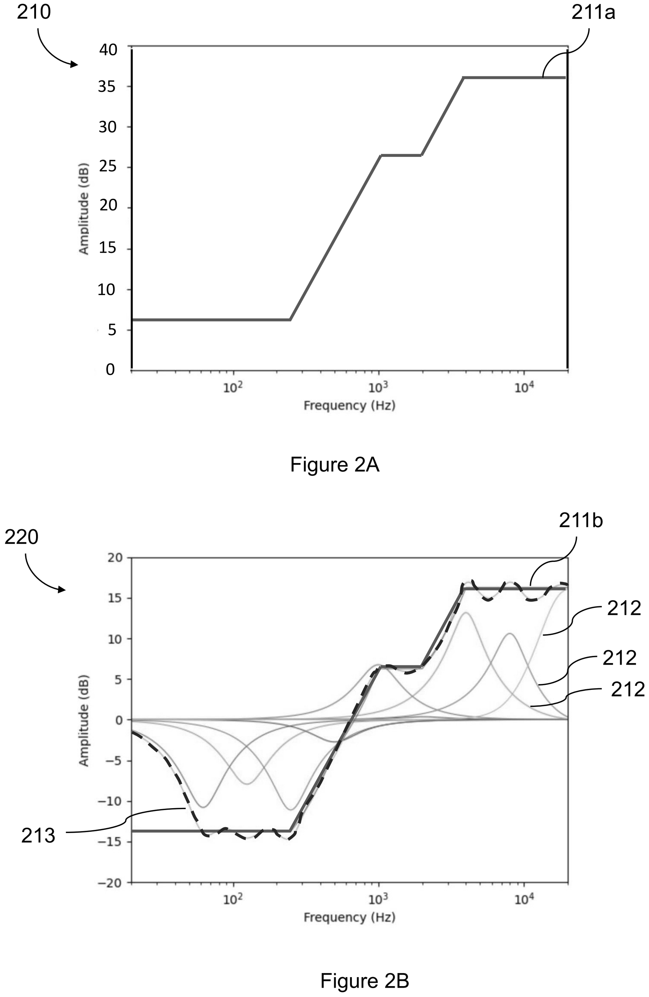

Figure 2A illustrates the combination of a plurality of basis function to approximate an exemplary optimal boost curve according to the present invention;

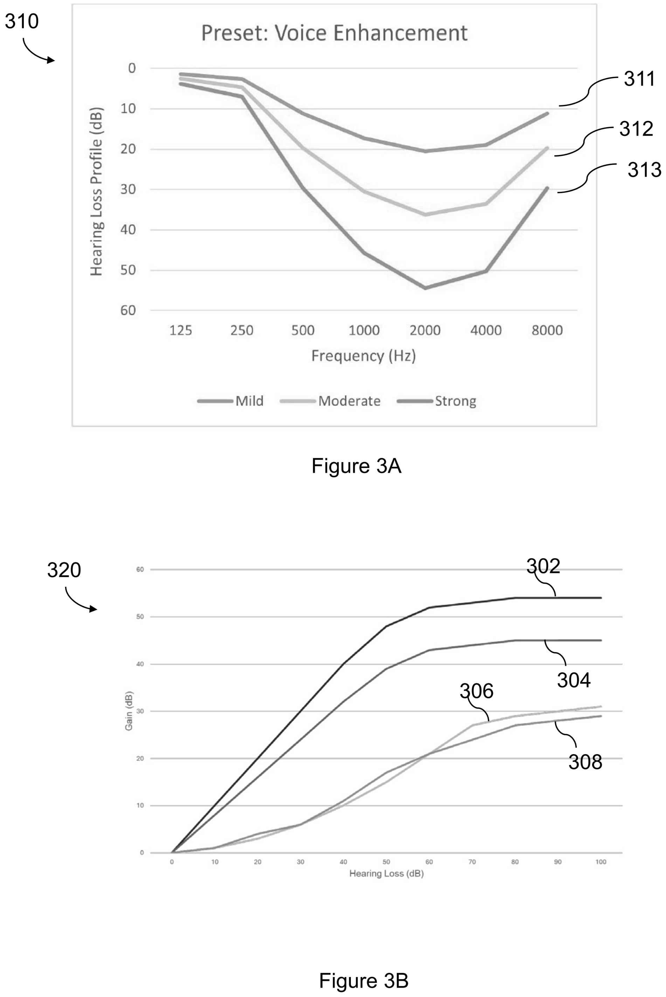

Figure 3A illustrates a plurality of hearing loss profiles showing a user's hearing loss values across different frequencies;
Figure 3A illustrates a plurality of modulation profiles showing an optimal boost value depending on a user's hearing loss values; and

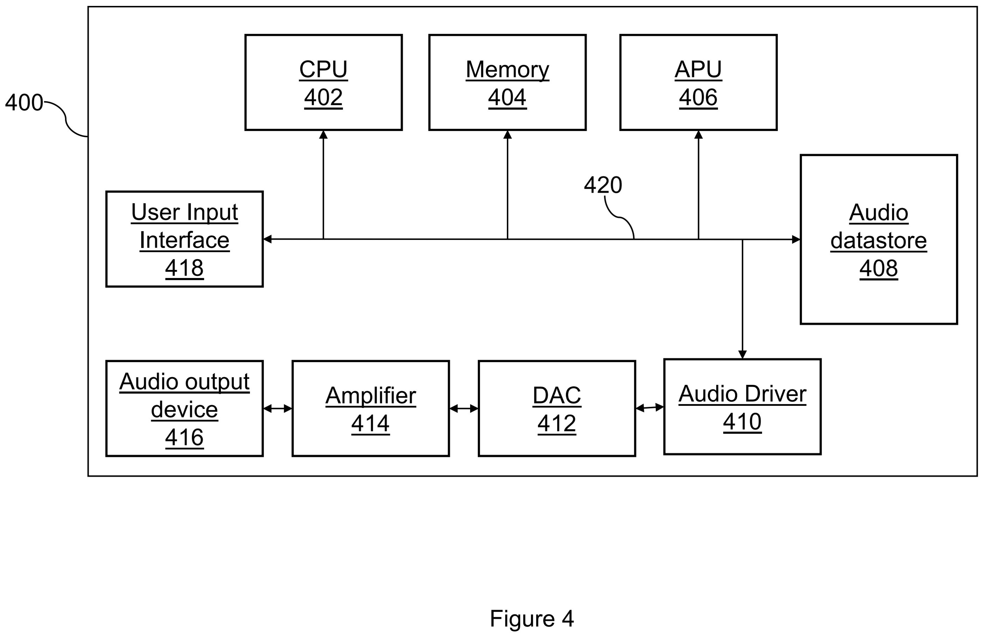

Figure 4 illustrates an example of a video gaming system for implementing the methods of the present invention.

### DETAILED DESCRIPTION

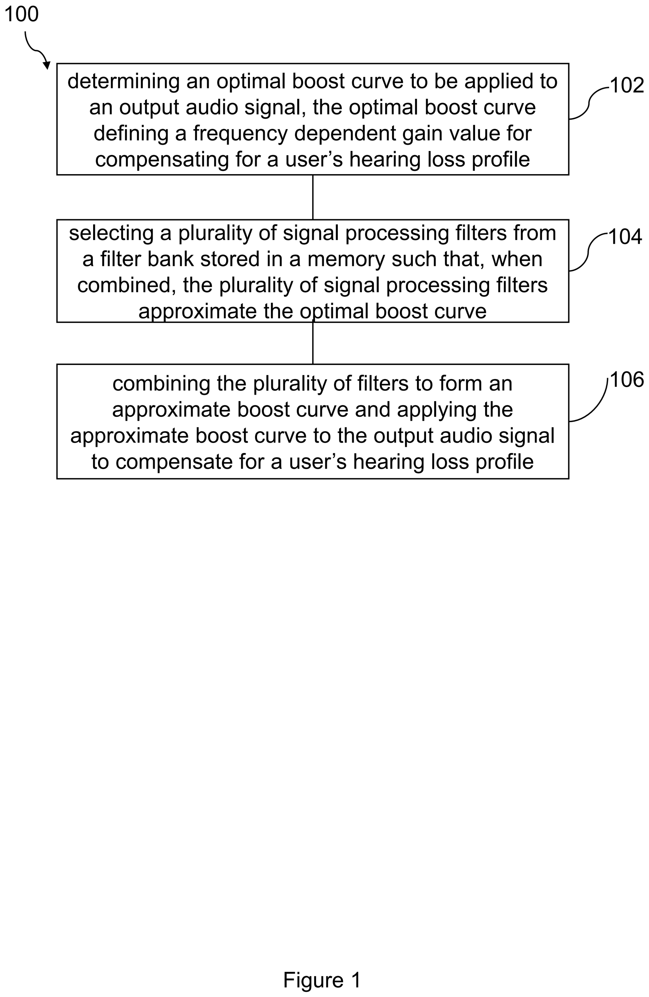

Figure 1 displays a method flow diagram 100 illustrating a computer implemented method for adjusting video game audio output of a video gaming system to compensate for users hearing loss program. The method comprises a first step 102 of determining an optimal boost curve to be applied to an output audio signal the optimal boost curve defining a frequency dependent game value for compensating for a users hearing loss profil;, a second step 104 of selecting a plurality of signal processing filters from a filter bank stored in a memory such that when combined, the plurality of signal processing filters approximate the optimal boost curve; and a final step of combining the plurality filters to perform an approximate boost curve and applying the approximate boost curve to the output audio signal to compensate for a user's hearing loss profile. The present invention thereby provides a method of compensating for a user's hearing loss or impairment, which may affect the users ability to hear and appreciate all aspects of video game audio, thus impacting their enjoyment of the game.

There are specific issues with compensating for user hearing loss in the audio output of video games in comparison to conventional hearing aids. Hearing aids operate on the principle that there is a significant portion of the audio the listener is exposed to that is unimportant and therefore the focus on boosting certain key frequencies. In contrast, in the context of video games, the audio is curated, with all parts of the audio selected for a reason. Therefore as much of the audio signal as possible must be preserved to provide the best experience. Furthermore, often the optimal boost settings will vary depending on the changing characteristics of the audio, for example whether it is a loud or quiet scene. The present method provides a means of boosting the output video game audio in accordance with a user's particular hearing loss profile. The present invention solves problems with implementing the required digital signal processing steps to apply a determined boost curve efficiently, while preserving the intended quality of the audio. In particular, by selecting from a plurality of signal processing filters stored in a filter bank and combining these any required boost curve may be generated at run time in a computationally efficient manner.

Figure 2a shows an example boost curve graph 210 showing an optimal boost curve 211 to be applied to an output audio signal. The optimal boost curve 211 defines a frequency dependent gain value for compensating for a user's particular hearing loss. The optimal boost curve 211 is generally a function defining a constant or linearly varying boost value in decibels to be applied over a plurality of frequency bands. In particular the boost curve may be a piecewise linear function defining a constant or varying gain value over each of a plurality of frequency bands, together spanning the full frequency spectrum. The optimal boost curve may be determined in a number of different ways, as will be described in more detail below.

In the case of Figure 2 the optimal boost curve comprises a boost of 6 dB between 0 and 1200 Hz, a linearly increasing boost value between 1200 Hz and a 1000 Hz, a constant value of around 25 dB between a 1000 and 1100 Hz, a linearly increasing value of gain between 1100 and 1300 Hz and a constant boost value of around 35dB over the remainder of the frequency values. This optimal boost curve can be determined based on a particular user's hearing loss profile to compensated for a specific frequency-dependent hearing loss profile. It may be selected by the user or automatically determined through a calibration procedure. The present invention comprises a computationally efficient means to generate and apply such a boost curve to adjust an output audio signal.

In the present invention the optimal boost curve 211 is generated by combining a selection of signal processing filters from a filter bank. As shown in Figure 2B, by selecting an appropriate choice of stored signal processing filters 212 and combining these, an approximate boost curve 213 may be generated which closely approximates the required optimal boost curve 211. The signal processing filters each define a frequency dependent gain value, where the gain values vary smoothly with frequency. More specifically the signal processing filters 212 are each a digital biquadratic or "biquad" filter. The filter bank stores a plurality of different biquad filters 212 which may be selected from, with a variable gain applied to each, such that together they combine to best approximate the required optimal boost curve 211. This provides a robust and computationally efficient method in which any desired optimal boost curve shape 211 may be generated by appropriate selection and combination of biquad filters 212 to approximate the required shape. This allows the optimal boost curve to updated regularly without exceeding processing capacity restrictions.

The biquad filters 212 are preferably selected such that the combination of the filters provide an approximate boost curve 213 that is within a threshold similarity to the optimal boost curve 211. The method may involve selecting a varying number of biquad filter to balance computational efficiency with the accuracy of the approximation to the optimal boost curve 211. The biquads 212 may be selected based on any appropriate fitting algorithm which select and combines the biquad filters 212 in order to provide an approximate boost curve 213 that is within the pre-defined threshold of the optimal boost curve 211.

Appropriate biquad filters are designed and stored such that, at run time, gains can be efficiently computed such that the sum of all the filters approximates a given set of desired frequency dependant gains, as defined by the optimal boost curve in Figure 2A. A challenge in constructing a gain curve in this way is that the biquad filters have pronounced, sharp peaks and troughs and therefore are, by their nature, quite "spikey". The sharpness of the peaks becomes more pronounced as their amplitude increases, as shown in Figure 2B. Therefore, when it is necessary to approximate high gain values (e.g. >35dB) the underlying biquads have increasingly sharp peaks, making it very difficult to approximate a flat gain boost, for example as present in the optimal boost curve 211a in Figure 2A.. This undulating variation in the curve at the maximum and minimum values can result in degradation of the audio quality and therefore a number of further additions to the method may be implemented to address this.

However, the flatness of the biquad filters is symmetrical for positive/negative gains around 0dB. Therefore , by offsetting the amplitude values to centre on 0dB axis, it is possible to minimise the effect of the narrow peaks increasing at high amplitdes. For example, if the filters are sufficiently flat within a 20dB magnitude, it is possible to generate up to 40dB (2 x 20dB) of desired gain variation, at this degree of flatness, by centring the desired gain values about the 0dB axis.

To achieve this an negative offset in amplitude is applied to centre the boost curve on the 0dB. This reduces the maximum gain values required of the underlying biquads and maximises the 'flatness' achievable in the resulting filter.

As shown in Figure 2A the optimal boost curve 211a provides a positive boost to be applied across all frequencies with the range in the gain value varying between 5 dB and 35 dB. Rather than fitting the biquads 212 directly to this optimal boost curve 211a, an offset may first be applied by substracting a constant from the dB values to provide an offset optimal boost curve 211b centred around the 0dB axis, as shown in Figure 2B. The offset optimal boost curbve 211b varies between approximately -15 dB and 15 dB rather than 5 and 35 dB as in the case of the optimal boost curve 211a. By fitting the biquads 212 to the offset optimal boost curve 211, improved results may be achieved in which a closer fit to the desired shape of the optimal boost curve may be attained.

In some examples the offset optimal boost curve 211b, as pictured in Figure 2B, may be applied to the output audio signal thus resulting in a negative gain being applied at some frequencies and a positive gain applied at others. This may be useful where the output audio is already loud and there is little head room for further boosting the loudness of certain frequencies. In this way, the relative loudness of different frequency bands of the output audio is still adjusted as intended, without the loudness reaching a ceiling and avoiding associated distortion effects.

In other examples, after fitting the biquads to the offset optimal boost curve 211b a positive offset may then be applied to fully or partially compensate for the initial negative offset. For example, as shown in Figures 2A and 2B a -20 dB negative offset may first be applied to the optimal boost curve shown in Figure 2A to arrive at the offset optimal boost curve 211b shown in Figure 2B in which the amplitude varies between -15 and +15 rather than 5 and 35 as shown in Figure 2A. After fitting the biquad 212 as shown in Figure 2B to arrive at the offset approximate boost curve 213, a positive 20 dB offset may then be applied to return the approximate boost curve 213 to vary between approximately 5 and 35 dB. This is generally implemented by applying the offset boost curve 211b to the audio output signal and subsequently applying a uniform gain to this adjusted audio output signal to compensate for the negative offset.

In other examples the gain offset applied, i.e. the positive gain applied after fitting the biquads to the offset optimal boost curve 211b, may be varied depending on one and more parameters. Most usefully, the amplitude of the positive gain (or the initial negative gain) applied may depend on the loudness of the audio output signal. For example, in a quiet scene there may be more available amplitude (or "head room"), relative to the maximum possible amplitude than in a louder scene. In this example, the initial negative offset may be full compensated to provide a positive gain across all frequencies. In contrast, in a loud scene, the offset optimal boost curve 211b may be used, or a positive offset applied to provide only a partial compensation of the initial negative offset. In this way, the maximum gain of the boost curve will be reduced to account for the limited headroom available, and there may be some frequencies where a negative gain value is applied.

In addition to the gain value applied before application of the approximate optimal boost curve 213, a smoothing function may be applied to further reduce the oscillating shape of the approximate boost curve 213 and provide a smoothed approximate boost curve. Furthermore, a limiter function may be applied to mitigate the effect of sharp noises such as sharp increases in amplitude in the output audio signal. Ideally, the final gain applied may be adjusted depending on the loudness of the output audio signal to make sure there is no clipping of the audio signal and reduce the impact of distortion while appropriately boosting the frequencies of the output audio signal to mitigate for the users hearing loss profile.

The selected biquad filters 212 may either be applied in series or parallel, depending on hardware constraints and the need for signal transparency.

As described above, the initial optimal boost curve, to be constructed from the biquad filters, may be determined in a number of different ways. Preferably the optimal boost curve is determined based on a specific user's hearing loss profile. Example hearing loss profiles are illustrated in the graph 310 of Figure 3A for mild hearing loss 311, moderate hearing loss 312, and strong hearing loss 313. As shown, the hearing loss profiles illustrate a hearing loss value that varies with frequency, with progressively increasing hearing loss values for mild, moderate and strong hearing loss.

The hearing loss profile is a representation of the user's hearing ability at different frequencies. More particularly, the hearing loss profile describes the user's hearing sensitivity at various frequencies or frequency bands. In some implementations, the hearing loss profile is an audiogram. The audiogram is represented as data through a set of numerical values that correspond to hearing thresholds at various frequencies for both ears (they can equally be represented as hearing loss values as pictured in the example of Figure 3A). The hearing thresholds correspond to the lowest intensity of sounds that the user can hear across a range of frequencies. Respective hearing thresholds are associated with the left ear and the right ear.

Obtaining the hearing loss profile associated with the user may comprise: accessing a memory (e.g., the memory 404 of system 400 as shown in Figure 4) and extracting the hearing loss profile data. The user could, for example, upload an audiogram file (for example, a CSV file) to the video gaming system 400 of Figure 4 (i.e., the memory 404) and subsequently interact with the UI to select the audiogram.

In an alternative implementation, the hearing loss profile may be selected from a plurality of premade or preset hearing loss profiles. The plurality of premade hearing loss profiles are predetermined according to a range of different hearing loss profile types. For example, a first premade hearing loss profile may comprise hearing thresholds that are higher at higher frequencies, and lower at lower frequencies. This first premade hearing loss profile may be particularly suitable for users with tinnitus, because higher frequency sounds may be obscured or masked by the tinnitus, thereby negatively affecting the user's ability to hear these higher frequency sounds. A second premade hearing loss profile may comprise a hearing threshold that is higher at lower frequencies and lower at higher frequencies. It will be appreciated that these first and second premade hearing loss profiles are by way of example only, and there may be many more variations of pre-stored hearing loss profiles. This implementation is useful for users who may not have access to an audiogram.

In this alternative implementation, the step of determining an optimal boost curve 402 may comprise obtaining a hearing loss profile associated with the user and determining an optimal boost curve suitable for compensating the hearing loss values. It some examples, obtaining a hearing loss profile involves receiving a user selection of a hearing loss profile from a plurality of premade hearing loss profiles. Receiving a user selection of the hearing loss profile may comprise: outputting, via the audio output device 416, for each frequency band of a plurality of frequency bands, test audio across a range of amplitudes; receiving a user input indicative of the user's sensitivity at each frequency band; and selecting a hearing loss profile from a plurality of premade hearing loss profiles based on the user input. The plurality of amplitudes could be discrete or continuous. The video gaming system 400 instructs the user to provide the user input to the video game controller when the user detects (i.e., hears) the output sound. Based on these user inputs, the video gaming system can select a premade hearing loss profile that is the closest match to the user's hearing loss profile.

For example, for the test audio of a first frequency band (e.g., 20 Hz to 250 Hz), the system 100 gradually increases the amplitude until the user provides the user input (i.e., when they hear the test audio). This user input is indicative of the user's sensitivity at this first frequency band.

In a further alternative implementation, the hearing loss profile is input by the user. In this implementation, the step of obtaining the hearing loss profile associated with the user comprises: receiving a user input indicative of the hearing loss profile. For example, the video gaming system 400 may provide an interface for the user to input their hearing loss threshold across different frequencies.

In some examples, the optimal boost curve may be determined based on both on the hearing loss profile of the user and the characteristics of the audio signal to be output. In particular, the compensation to be applied may vary depending on the characteristics of the output audio. The compensation for any particular frequency may therefore vary with time as the characteristics of the output audio vary. More specifically, the gain to be applied to compensate the hearing loss may vary depending on a current loudness of the audio signal to be output. In this way, the determined boost to be applied is not simply selected based on the user's hearing loss at a particular frequency, but also based on the loudness of the audio to be boosted. For example, quiet components of the audio signal to be output may need to be boosted more than louder components of the audio signal.

The method may therefore involve obtaining audio data to be output on a video gaming system (i.e. the "audio signal" to be output), the audio data corresponding to an audio segment spanning a period of time, the audio segment comprising audio across a plurality of frequency bands. Referring to the illustrative system of Figure 4, the processor 402 may obtain the audio data from the audio datastore 408.

The "audio segment" corresponds to output audio that is to be output over a period of time. The period of time may vary in different examples. This effectively determines the rate at which the boost curve is updated so by using a shorter period, the loudness of the audio is more regularly sampled and the boost values updated, as explained in more detail below. The period of time could be, for example, the length of a scene of the video game, or particular window of the audio. The "scene" is a specific segment of the video game and may be considered a cohesive unit within the games larger structure, for example because a continuous audio asset is provided. The scene audio may comprise different audio elements, including, but not limited to, a background music element, sound effect elements, dialogue elements, and ambient sound elements. These audio segments therefore comprise different audio elements. These audio elements comprise data representative of the plurality of frequency bands. The amplitude or energy of each of the frequency bands can vary over time. The length of the period of time could be pre-programmed. Alternatively, the user could select the period of time such that the method further comprises: receiving a user selection of the period of time over which the audio segment spans.

The range of frequencies used in video game audio typically spans from 20 Hz to 20 kHz. In an example implementation, there are 6 frequency bands spanning the range of frequencies of the output audio. The frequency bands may be of equal size or each frequency band could vary in size such that one frequency band covers a greater range of frequency values than another frequency band. For example, a first frequency band could cover a range of low frequencies from 20 Hz to 250 Hz and a second frequency band could cover a range of high frequencies from 4 kHz to 20 kHz.

In a simplified illustrative example, there is a first frequency band and a second frequency band. The first frequency band (herein the "low" frequency band) comprises frequencies less than 4 kHz. The second frequency band (herein the "high" frequency band) comprises frequencies greater than or equal to 4 kHz and less than 8 kHz.

The method may comprise determining, for each frequency band of the plurality of frequency bands, a respective loudness level. The "loudness level" describes the "loudness" of the audio within the frequency band of the audio segment over the period of time. The loudness could be determined based on an objective measure of intensity of the audio, for example a measure of the energy of the audio signal within the frequency band. Determining, for each frequency band of the plurality of frequency bands, a respective loudness level, could therefore comprise obtaining an energy of the audio data within the frequency band; and selecting the loudness level from a plurality of discrete loudness levels based on the energy of the frequency band. Each loudness level covers a respective range of energies.

In other examples, a different measure of loudness may be used, such as a measure linked to user perception. For example, a model could be used that maps the intensity across the frequency band to a user-perceived loudness level.

In an illustrative example, the plurality of predetermined loudness levels comprises a first loudness level, e.g. "quiet", and a second loudness level, e.g. "loud". The first loudness level represents a first range of energy values, and the second loudness level represents a second range of energy values. The second range of energies spans a range of energy values having a greater magnitude than the range of energy values of the first range of energies. Thus, the first loudness level represents a "quiet" loudness level, and the second loudness level represents a "loud" loudness level. It will be understood that there may be any number of loudness levels, each representing a respective range of energy values.

In some implementations, determining, for each frequency band of the plurality of frequency bands, the respective loudness level comprises determining, for each frequency band of the plurality of frequency bands, an energy of the frequency band and selecting the loudness level based on the energy of the frequency band. This implementation typically occurs at runtime. In one implementation, referring to the example system of Figure 4, to obtain the energy of a particular frequency band, the CPU 102 calculates a Root Mean Square (RMS) value of the frequency band over a period of time. In this implementation, for a particular frequency band, the audio data may comprise a series of discrete amplitude values distributed over the period of time. The CPU 102 calculates the RMS value of the series of discrete magnitude values of the audio data for the frequency band. Thus, in this implementation, determining, for each frequency band of the plurality of frequency bands, the energy of the frequency band comprises: calculating an RMS value of the magnitude values of the frequency band. Calculating the RMS value of the magnitude values provides an average energy over the period of time.

Continuing with this implementation, to select the loudness level based on the energy of the frequency band, the CPU 102 identifies which of the plurality of predetermined loudness levels covers the energy of the frequency band. Thus, in this implementation, selecting, for each frequency band of the plurality of frequency bands, the loudness level based on the energy of the frequency band comprises: identifying which of the plurality of predetermined loudness levels covers the energy of the frequency band.

In an alternative implementation, the audio data comprises data that is representative of the energy of a particular frequency band. In this implementation, the energy of a particular frequency band is predetermined and included as part of the game data. Thus, the energy of the frequency band is obtained from the audio data. In this implementation, the energy of a particular frequency band may also have been determined by calculating an RMS value of the frequency band over the period of time. In an alternative implementation, the energy of a particular frequency band could be assigned based on a user-assigned value. For example, a video game designer may manually assess the loudness of a particular frequency band and assign an appropriate loudness level, or it may be calculated using a machine learning model that maps an audio signal to a user-perceived loudness.

Continuing with the example, the loudness level of the low frequency band is determined to be the first loudness level (herein the "quiet" loudness level), for example because the energy of the low frequency band is determined to fall within the range of the first loudness level. The loudness level of the high frequency band is determined to be a second loudness level (herein the "loud" loudness level), for example because the energy of the high frequency band is determined to fall within the range of the second loudness level.

Once the loudness of the audio within a frequency band is determined, the method comprises determining a modulation profile based on both the frequency band and the determined loudness. A modulation profile is a function defining a gain to be applied based on a hearing loss value. A plurality of modulation profiles, 302, 304, 306, 308 are shown in the graph 320 of Figure 3B. The modulation profiles comprise a first modulation profile 302; a second modulation profile 304; a third modulation profile 306; and a fourth modulation profile 308. The first modulation profile 302 is for a first frequency band (e.g., a low frequency band) at a first loudness level (e.g., a "quiet" loudness level). The second modulation profile 304 is for a second frequency band (e.g., a high frequency band) at the quiet loudness level. The third modulation profile 306 is for the low frequency band at a second loudness level (e.g., a "loud" loudness level). The fourth modulation profile 308 is for the high frequency band at the loud loudness level.

Figure 3B therefore illustrates a plurality of modulation profiles for a simple example in which the audio is split into two frequency bands and two loudness levels. In this example, for each given audio segment, the loudness is measured for each of the two frequency bands to determine a loudness level (in this example simply "quiet" or "loud") for each band. Based on the loudness, a modulation profile is selected for each frequency band. An optimal boost curve may then be constructed starting from the user's hearing loss profile, for example the mild hearing loss profile 311 of Figure 3A. To illustrate using this example, the loudness measurement is made to determine that the low frequency band is quiet and the high frequency band is loud. Therefore, modulation profile 302 is selected for the low frequency band and modulation profile 308 for the high frequency band. The hearing loss values are then taken from the hearing loss profile 311 and for the low frequency values, modulation profile 302 is used to determine the boost value at each frequency and for the high frequency values modulation profile 308 is used to determine the boost values. In this way, an optimal boost curve similar to that shown in Figure 2A can be determined.

This is a simple case for illustrating the concept. When implemented there may be more than two frequency bands, for example six frequency bands. There may also be a greater number of discrete loudness levels, such that there are a greater number of modulation profiles of the type shown in the graph 320 of Figure 3B. Developing from this concept further, in some examples, rather than selecting a discrete loudness level and corresponding modulation profile, the method may interpolate between them. For example, if the loudness is measured to be a midrange value for the high frequency band, the method may involve selecting gain values between curve 302 and 308. More generally still, the modulation profile may not be in the form of a series of discrete modulation curves 320 as shown in Figure 3B. Instead, the modulation profile may take the form of a continuous function. In particular, the required gain value may be a continuous function of frequency, loudness and hearing loss value. In this case, the method would involve inputting a determined level of loudness and the frequency into the function for each value of hearing loss from the hearing loss profile 310 to provide the gain values that form the optimal boost curve.

In some examples, the hearing loss profile may provide data on hearing loss values that differ across the frequency bands used for determining loudness. In other words, the user's hearing loss values may vary across the frequency bands within which the loudness is determined. In this case, the hearing loss data is more granular than the loudness data across frequencies. There are a number of approaches for handling this situation. In one example, the method comprises: obtaining hearing loss values corresponding to a plurality base frequencies of the frequency band; obtaining gain values from the modulation corresponding to the hearing loss values of the base frequencies; and obtaining gain values corresponding to other frequencies of the frequency band by interpolating the gain values associated with neighbouring base frequencies. The base frequencies or anchor frequencies are discrete frequency values distributed across the frequency band. These base frequencies are typically equally distributed across the frequency band. For example, if a frequency band spans the range of 50 Hz to 500 Hz, and there are 6 base frequencies, the base frequencies could be 50 Hz, 140 Hz, 230 Hz, 320 Hz, 410 Hz, and 500 Hz. The other frequencies are frequencies in the frequency band other than the base frequencies. The gain values corresponding to the base frequencies can be obtained by determined the gain value from the modulation profile corresponding to the loudness level of the frequency band. The gain values corresponding to the other frequencies of the frequency band are obtained by interpolating neighbouring gain values. For example, to obtain the gain value for a frequency of 95 Hz, the gain values associated with the base frequencies of 50 Hz and 140 Hz are interpolated.

In an alternative implementation, an average hearing loss value is determined for the frequency band and a corresponding gain value for the average hearing loss value is applied across the whole frequency band. In a simplified example, if a first frequency band comprises hearing loss values of 25 dB, 30 dB, and 35 dB, the average hearing loss value would be 30 dB. The gain value corresponding to the average hearing loss value is applied across the whole frequency band. Using the low frequency band as an example, the third modulation profile 306 was selected and so a gain of around 5 dB would be applied if the average hearing loss value was 30 dB. Using the high frequency band as an example, the second modulation profile 304 was selected and so a gain of around 25 dB would be applied if the average hearing loss value was 30 dB. This implementation is computationally inexpensive because a single gain value is obtained and applied across the frequency band. It will be appreciated that this gain value is an approximate gain value because a single gain value is applied across the frequency band.

In a further alternative implementation, a hearing loss value for each frequency value of the frequency band is obtained from the hearing loss profile, and a corresponding gain value for the frequency value is applied to the frequency value. This implementation is more computationally expensive than the first implementation because a gain value is obtained for each frequency value of the frequency band. However, this implementation provides a higher quality output.

After applying the gain values, determined using the modulations profiles, to each frequency band, modified video game audio is generated. In preferable examples, all frequency bands of the initial video game audio are boosted. In particular, each modulation profile originates at the origin meaning there is a positive boost value to be applied to every hearing loss value. Since each modulation profile provides a different gain value depending on the hearing loss value for different frequency bands or frequencies, and the loudness level of the frequency bands, each frequency band or frequency is boosted by a different amount. The modified video game audio sounds clearer and to the user and less audio information is lost when compared to the unmodified video game audio.

The method is typically repeated for a plurality of audio segments, such that the modified video game audio is re-calculated for each audio segments. Each audio segment typically comprises different frequency bands having different loudness levels. In some cases, there may be a transient change between a loudness level of a frequency band from a first audio segment to a second audio segment. To reduce sudden increases in gain, historical loudness data may be used to smooth the determination of the loudness level.

Figure 4 illustrates an example video gaming system 400 configured to implement methods disclosed herein.

The system 400 comprises a central processing unit (CPU) 402; a memory 404; an audio processing unit (APU) 406; an audio datastore 408; audio drivers 410; a digital-to-analogue converter (DAC) 412; an amplifier 414; and an audio output device 416. The system 400 further comprises a system bus 420 arranged to communicatively couple the CPU 402; the memory 404; the APU 406; the audio datastore 408; and the audio driver 410. The system 400 may further comprise other components typical to a video gaming system, such as a user input interface 418 arranged to facilitate communication with a user input device (not shown), such as a video game controller. The system 400 is typically in communication with a network (not shown).

The CPU 402 is arranged to control operation of the system 400. The CPU 402 is in communication with the memory 404 and is arranged to load instructions stored on the memory 404 in order to cause the CPU 402 to perform the methods disclosed herein. The memory 404 may include one or more volatile or non-volatile storage devices, such as random-access memory (RAM), dynamic RAM (DRAM), and/or any other suitable storage medium comprising instructions that when executed by the CPU 402, cause the CPU 402 to perform the method steps disclosed herein. The memory 404 also comprises one or more game files comprising game logic that when executed by the CPU 402, cause the CPU to manage and process audio data.

The APU 406 is arranged to be controlled by the CPU 402. For example, the APU 406 comprises an APU driver (not shown) for controlling operation of the APU 406 to facilitate execution of the methods disclosed herein. The CPU 402 provides audio processing instructions to the APU 406 to process and manage audio data. The APU 406 carries out various tasks, including processing audio signals, managing audio channels, and facilitating high-quality audio output.

The CPU 402 is coupled to the audio datastore 408 such that the CPU 402 can read and write data to the audio datastore 408. The audio datastore 408 may include one or more volatile or non-volatile storage devices, such as random-access memory (RAM), dynamic RAM (DRAM), and/or any other suitable storage medium. The audio datastore 408 may be associated with the memory 404. The audio datastore 408 is arranged to store audio data representative of various audio assets of a particular video game. These audio assets typically comprise but is not limited to comprising sound effect assets; music assets; dialogue assets; and ambient sound assets. Some assets, such as the music assets, may be directly streamed via an input device, such as a disk drive comprising a disk, or the network.

The audio driver 410 is arranged to facilitate communication between software components and hardware components. The audio driver 410 is arranged to provide data transfer and format conversion. The audio driver 410 receives audio data from the APU 406, performs one or more format conversion operations, and provides digital audio signals to the DAC 412.

The DAC 412 is arranged to receive digital audio signals and convert the digital audio signals into analogue audio signals suitable for output. The DAC 412 receives the digital audio signals from the audio driver 410, converts the digital audio signals into analogue audio signals, and outputs the analogue audio signals to the amplifier 414.

The amplifier 414 is arranged to receive the analogue signals from the amplifier 414 and boosts the analogue audio signals to a level suitable for driving the audio output device 416. The amplifier 414 is particularly useful in the present invention which requires different levels of audio boosting for different frequency bands.

The audio output device 416 is arranged to receive the boosted analogue audio signals from the amplifier 414 and generate sound waves based on these boosted analogue audio signals. The audio output device 416 could be any device suitable for generating sound waves. For example, the audio output device 416 could be a speaker 416 or a headset 416.

It will be understood that the system 400 is not limited to these components and typically includes other features, such as a GPU (not shown) arranged to be controlled by the CPU 402. For example, the CPU 402 comprises a GPU driver (not shown) for controlling operation of the GPU to facilitate execution of various graphics processing operations. Typically, the CPU 402 provides graphics rendering instructions to the GPU. To process the graphics rendering instructions, the CPU 402 controls the GPU to perform the rendering of graphics data. These graphics rendering instructions conform to a graphics application programming interface (API) such that the GPU can efficiently implement graphics rendering steps. The GPU comprises a GPU memory (not shown) arranged to store visual data such as textures, geometry, and other graphical assets. The GPU memory includes, for example, video random access memory (VRAM). The GPU may additionally carry out some audio processing tasks, for example for spatial audio in 3D environments.

### EMBODIMENTS

Although the present invention is defined in the claims, it should be understood that the present invention can also (alternatively) be defined in accordance with the following embodiments:
1. A computer-implemented method for adjusting the audio output of a video gaming system to compensate for a user's hearing loss profile, the method comprising:
   determining an optimal boost curve to be applied to an output audio signal, the optimal boost curve defining a frequency dependent gain value for compensating for a user's hearing loss profile;
   selecting a plurality of signal processing filters from a filter bank stored in a memory such that, when combined, the plurality of signal processing filters approximate the optimal boost curve;
   combining the plurality of filters to form an approximate boost curve and applying the approximate boost curve to the output audio signal to compensate for a user's hearing loss profile.
2. The computer-implemented method of embodiment 1 wherein the optimal boost curve to be applied is determined based on characteristics of the audio signal to be output.
3. The computer-implemented method of embodiment 1 or embodiment 2 wherein the method comprises, continually, measuring a property of the output audio signal, varying the optimal boost curve to be applied and selecting an updated plurality of signal processing filters to approximate the optimal boost curve.
4. The computer-implemented method of any preceding wherein selecting the plurality of signal processing filters comprises: selecting a plurality of signal processing filters from a filter bank stored in a memory and adjusting the gain of one or more selected filters such that, when combined, the plurality of signal processing filters approximate the optimal boost curve.
5. The computer-implemented method of any preceding wherein the plurality of signal processing filters each define a frequency dependent gain value, where the gain value varies smoothly with frequency.
6. The computer-implemented method of embodiment 5 wherein the plurality of signal processing filters each comprise a digital biquadratic filter.
7. The computer-implemented method of any preceding embodiment wherein the optimal boost curve comprises a piecewise linear function defining the variation of gain value with frequency.
8. The computer-implemented method of any preceding embodiment wherein the optimal boost curve comprises a step function defining the variation of gain value with frequency.
9. The computer-implemented method of any preceding embodiment wherein selecting the plurality of signal processing filters comprises:
   selecting a plurality of filters from a larger number of filters stored in the filter bank, such that the plurality of selected filters when combined provide a frequency dependent gain curve that is within a threshold deviation from the optimal boost curve.
10. The computer-implemented method of any preceding embodiment wherein selecting a plurality of signal processing filters from a filter bank comprises applying a fitting algorithm that determines the optimal combination of filters selected from the filter bank that best approximate the optimal boost curve.
11. The computer-implemented method of any preceding embodiment, wherein the method comprises, after determining the optimal boost curve:
   applying a negative offset to the optimal boost curve to provide an offset optimal boost curve defining negative and positive values of gain;
   selecting a plurality of signal processing filters from the filter bank such that, when combined, the plurality of signal processing filters approximate the offset optimal boost curve;
   combining the plurality of selected filters to form an offset approximate boost curve that approximates the offset optimal boost curve.
12. The computer-implemented method of embodiment 11, wherein the method further comprises:
   applying the offset approximate boost curve to the output audio signal and subsequently applying a gain to the output audio signal to at least partially cancel the negative offset.
13. The computer-implemented method of embodiment 11 or embodiment 12, wherein the value of the negative or positive offset is selected based on one or more properties of the video game audio.
14. The computer-implemented method of embodiment 13, wherein the value of the offset is selected based on a determined scene loudness.
15. The computer-implemented method of any preceding embodiment wherein combining the plurality of filters to form an approximate boost curve and applying the approximate boost curve to the output audio signal comprises applying each signal processing filter in parallel.
16. The computer-implemented method of any of embodiments 1 to 14 wherein combining the plurality of filters to form an approximate boost curve and applying the approximate boost curve to the output audio signal comprises applying each signal processing filter in series.
17. The computer-implemented method of any preceding embodiment wherein the method further comprises applying a smoothing function to the approximate boost curve before applying to the output audio signal.
18. The computer-implemented method of any preceding embodiment wherein the method further comprises applying a limiter to the audio signal after the approximate boost curve has been applied, wherein the limiter prevents the output audio exceeding a threshold magnitude.
19. The computer-implemented method of any preceding embodiment wherein determining an optimal boost curve comprises:
   obtaining a hearing loss profile associated with a user, the hearing loss profile defining a hearing loss value varying with frequency;
   determining an optimal boost curve for compensating the hearing loss value.
20. The computer-implemented method of embodiment 19 wherein determining an optimal boost curve comprises:
   determining a loudness of the audio signal to be output;
   determining the optimal boost curve based on both the hearing loss profile and the loudness of the audio signal to be output.
21. The computer-implemented method of embodiment 20 wherein determining an optimal boost curve comprises:
   obtaining a hearing loss profile associated with a user, the hearing loss profile defining a hearing loss value varying with frequency;
   obtaining an audio signal to be output on a video gaming system, the audio data comprising a plurality of frequency bands;
   determining, for each frequency band of the plurality of frequency bands, a respective loudness level;
   selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile; and
   determining the optimal boost curve using the modulation profile for each frequency band and the hearing loss value provided by the hearing loss profile.
22. The computer-implemented method of any preceding embodiment, wherein determining, for each frequency band of the plurality of frequency bands, a respective loudness level comprises:
   obtaining an energy of the audio data within the frequency band; and
   determining the loudness level based on the energy of the frequency band.
23. The computer-implemented method of any of embodiments 21 or 22, wherein determining the optimal boost curve comprises, within each frequency band:
   obtaining, from the hearing loss profile, a hearing loss value for each frequency value of the frequency band;
   obtaining, for each hearing loss value, a corresponding gain value from the modulation profile; and
   constructing the optimal boost curve from the determined gain values across the frequency bands.
24. A non-transitory storage medium comprising instructions that when executed by a processor cause the processor to perform the method of any preceding embodiment.
25. A video game system for modifying audio data, the system comprising a processor and being configured to perform the method of any of embodiments 1 to 23.

## Claims

1. A computer-implemented method for adjusting the audio output of a video gaming system to compensate for a user's hearing loss profile, the method comprising:
determining an optimal boost curve to be applied to an output audio signal, the optimal boost curve defining a frequency dependent gain value for compensating for a user's hearing loss profile;
selecting a plurality of signal processing filters from a filter bank stored in a memory such that, when combined, the plurality of signal processing filters approximate the optimal boost curve;
combining the plurality of filters to form an approximate boost curve and applying the approximate boost curve to the output audio signal to compensate for a user's hearing loss profile.

2. The computer-implemented method of claim 1 wherein the optimal boost curve to be applied is determined based on characteristics of the audio signal to be output; and/or
wherein the method comprises, continually, measuring a property of the output audio signal, varying the optimal boost curve to be applied and selecting an updated plurality of signal processing filters to approximate the optimal boost curve.

3. The computer-implemented method of any one of claims 1 or 2, wherein selecting the plurality of signal processing filters comprises: selecting a plurality of signal processing filters from a filter bank stored in a memory and adjusting the gain of one or more selected filters such that, when combined, the plurality of signal processing filters approximate the optimal boost curve.

4. The computer-implemented method of any one of claims 1 to 3, wherein the plurality of signal processing filters each define a frequency dependent gain value, where the gain value varies smoothly with frequency, optionally wherein the plurality of signal processing filters each comprise a digital biquadratic filter.

5. The computer-implemented method of any one of claims 1 to 4, wherein the optimal boost curve comprises a piecewise linear function defining the variation of gain value with frequency and/or a step function defining the variation of gain value with frequency.

6. The computer-implemented method of any one of claims 1 to 5, wherein selecting the plurality of signal processing filters comprises:
selecting a plurality of filters from a larger number of filters stored in the filter bank, such that the plurality of selected filters when combined provide a frequency dependent gain curve that is within a threshold deviation from the optimal boost curve; and/or
applying a fitting algorithm that determines the optimal combination of filters selected from the filter bank that best approximate the optimal boost curve.

7. The computer-implemented method of any one of claims 1 to 6, wherein the method comprises, after determining the optimal boost curve:
applying a negative offset to the optimal boost curve to provide an offset optimal boost curve defining negative and positive values of gain;
selecting a plurality of signal processing filters from the filter bank such that, when combined, the plurality of signal processing filters approximate the offset optimal boost curve;
combining the plurality of selected filters to form an offset approximate boost curve that approximates the offset optimal boost curve,
optionally
wherein the method further comprises applying the offset approximate boost curve to the output audio signal and subsequently applying a gain to the output audio signal to at least partially cancel the negative offset; and/or
wherein the value of the negative or positive offset is selected based on one or more properties of the video game audio, optionally wherein the value of the offset is selected based on a determined scene loudness.

8. The computer-implemented method of any one of claims 1 to 7, wherein combining the plurality of filters to form an approximate boost curve and applying the approximate boost curve to the output audio signal comprises:
applying each signal processing filter in parallel; or
applying each signal processing filter in series.

9. The computer-implemented method of any one of claims 1 to 8, wherein the method further comprises:
applying a smoothing function to the approximate boost curve before applying to the output audio signal; and/or
applying a limiter to the audio signal after the approximate boost curve has been applied, wherein the limiter prevents the output audio exceeding a threshold magnitude.

10. The computer-implemented method of any one of claims 1 to 9, wherein determining an optimal boost curve comprises:
obtaining a hearing loss profile associated with a user, the hearing loss profile defining a hearing loss value varying with frequency; and
determining an optimal boost curve for compensating the hearing loss value, optionally wherein determining an optimal boost curve comprises:
determining a loudness of the audio signal to be output;
determining the optimal boost curve based on both the hearing loss profile and the loudness of the audio signal to be output.

11. The computer-implemented method of claim 10, wherein determining an optimal boost curve comprises:
obtaining a hearing loss profile associated with a user, the hearing loss profile defining a hearing loss value varying with frequency;
obtaining an audio signal to be output on a video gaming system, the audio data comprising a plurality of frequency bands;
determining, for each frequency band of the plurality of frequency bands, a respective loudness level;
selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile; and
determining the optimal boost curve using the modulation profile for each frequency band and the hearing loss value provided by the hearing loss profile.

12. The computer-implemented method of any one of claims 1 to 11, wherein determining, for each frequency band of the plurality of frequency bands, a respective loudness level comprises:
obtaining an energy of the audio data within the frequency band; and
determining the loudness level based on the energy of the frequency band.

13. The computer-implemented method of any one of claims 11 or 12, wherein determining the optimal boost curve comprises, within each frequency band:
obtaining, from the hearing loss profile, a hearing loss value for each frequency value of the frequency band;
obtaining, for each hearing loss value, a corresponding gain value from the modulation profile; and
constructing the optimal boost curve from the determined gain values across the frequency bands.

14. A non-transitory storage medium comprising instructions that when executed by a processor cause the processor to perform the method of any one of claims 1 to 13.

15. A video game system for modifying audio data, the system comprising a processor and being configured to perform the method of any one of claims 1 to 13.
